# FASCICULE DE BREVET EUROPEEN

(11) **EP 0 426 585 B1**
(45) Date de publication et mention de la délivrance du brevet: **19.03.1997**
(21) Numéro de dépôt: 90420473.2
(22) Date de dépôt: 31.10.1990
(51) Int. Cl.: B60N 2/26, B60N 2/38

(54) **Siège automobile pour enfant**
Kraftfahrzeugsitz für Kinder
Infant car seat

(30) Priorité: 31.10.1989 FR 8914727
(43) Date de publication de la demande: 08.05.1991
(73) Titulaire: RENOLUX GAT, 38230 Charvieu Chavagneux (FR)
(72) Inventeur: Nania, Yves, F-38230 Tignieu (FR)
(74) Mandataire: Maureau, Philippe

(56) Documents cités:
- EP-A- 0 302 607
- DE-U- 8 527 245
- DE-U- 8 900 198
- GB-A- 2 207 043

## Description

La présente invention a pour objet un siège automobile pour enfant. Il est fréquent dans un but de sécurité et de confort pour les enfants en bas âge de placer ceux-ci dans des sièges spécialement adaptés, au cours de trajets effectués en automobile.

Un siège automobile pour enfant comprend une coque généralement en matière synthétique formant un baquet, rembourré et revêtu d'une garniture par exemple en tissu, dans lequel l'enfant est maintenu par des sangles. Ce siège est monté généralement sur le siège arrière d'un véhicule automobile et fixé sur celui-ci à l'aide de sangles reliées, par exemple, aux points d'ancrage des ceintures de sécurité.

Les sièges les plus traditionnels comportent une coque fixe qui est montée de façon non réglable sur le siège ou banquette din véhicule automobile.

Afin d'améliorer le confort de l'enfant, il est également connu de réaliser des sièges comportant une coque montée sur une embase par l'intermédiaire d'un rail courbe permettant un réglage de l'inclinaison de la totalité de la coque par rapport à l'embase.

Il est également apparu intéressant de réaliser le transport d'un enfant non pas le siège étant tourné vers l'avant, mais le siège étant tourné vers l'arrière, position dans laquelle un jeune enfant résiste mieux à une forte décélération. En outre, il est également avantageux de disposer d'un siège pivotant, de façon à pouvoir tourner ce siège du côté de la porte d'accès au véhicule à proximité de laquelle il se trouve pour faciliter les opérations de mise en place de l'enfant sur le siège, et de retrait de l'enfant hors du siège.

Toutefois, les dispositifs connus assurant un pivotement du siège par rapport à une embase sont complexes, comportent une articulation centrale din siège sur l'embase dont la solidité est moyenne, et sont d'une utilisation peu pratique.

Le document EP-A-0 302 607 (correspondant au préambule de la revendication indépendante) concerne un siège automobile pour enfant, comportant une embase destinée à être fixée au véhicule et une coque formant le corps din siège, fixée sur un support. Le support de la coque est monté sur l'embase avec possibilité de rotation, par l'intermédiaire d'un axe central, l'embase et le support comportant deux parties tubulaires engageables l'une dans l'autre, pour favoriser le guidage en rotation du support vis-à-vis de l'embase.

La présente invention vise à remédier auxdits inconvénients, en fournissant un siège automobile pour enfant qui soit de conception extrêmement simple, et ne nécessite la mise en oeuvre, pour réaliser l'articulation du siège sur une embase, que d'un nombre de pièces extrêmement réduit, tout en assurant un guidage très doux de la rotation du siège sur l'embase.

A cet effet, le siège qu'elle concerne, du type comportant un corps de siège constitué par une coque, et une embase équipée de moyens de fixation au véhicule automobile, le support de la coque étant monté sur l'embase avec possibilité de rotation par l'intermédiaire d'éléments coopérant pour former un axe central, est caractérisé en ce que l'embase comporte une ouverture circulaire, à l'intérieur de laquelle sont solidarisées deux coupelles supérieure et inférieure, comportant une partie prenant appui contre le bord délimitant l'ouverture, et deux ailes prenant appui respectivement au-dessus et au-dessous de la paroi de l'embase dans laquelle est ménagée l'ouverture, des moyens étant prévus pour assurer le blocage en rotation de l'ensemble constitué par les deux coupelles, vis-à-vis de l'embase, et en ce que l'embase comporte des nervures qui servent à l'appui des retours des coupelles supérieure et inférieure.

L'ouverture ménagée dans l'embase possédant un diamètre important, le guidage à l'aide des deux coupelles s'effectue sur un grand diamètre, ainsi que sur des surfaces importantes puisque ce guidage est effectué d'une part au niveau du bord circulaire délimitant l'ouverture, et d'autre part au niveau des retours des deux coupelles respectivement sur et sous l'embase du siège.

Afin de favoriser les conditions de rotation du siège par rapport à l'embase, cette dernière comporte des nervures qui servent à l'appui des retours ces coupelles supérieure et inférieure.

Avantageusement encore, ces nervures sont en forme d'arcs de cercle centrés sur l'axe de rotation du siège par rapport à l'embase.

Conformément à une autre caractéristique de l'invention, la coupelle inférieure possède une forme circulaire, tandis que la coupelle supérieure sur laquelle est fixée le siège possède une forme sensiblement carrée dont les diagonales sont situées sur les lignes longitudinale et transversale du siège. Cette caractéristique améliore la stabilité du siège sur son embase, puisque les efforts transmis par le siège sur l'embase sont essentiellement des efforts longitudinaux et transversaux.

Selon une autre caractéristique de l'invention, les moyens de blocage en rotation de l'ensemble constitué par les deux coupelles vis-à-vis de l'embase, sont constituées par un levier articulé sur l'embase, dont une extrémité pénètre sous l'action de moyens élastiques dans une encoche ménagée dans l'une des deux coupelles.

En pratique, il est prévu deux encoches de blocage diamétralement opposées, correspondant respectivement à une position du siège tourné vers l'avant, et à une position du siège tourné vers l'arrière. Il est important de ne pas pouvoir verrouiller le siège dans une position angulaire intermédiaire, car une telle position, en cas d'accident ou de forte décélération serait préjudiciable à la sécurité de l'enfant.

De toute façon, l'invention sera bien comprise à l'aide de la description qui suit, en référence au dessin schématique annexé, représentant à titre d'exemple non limitatif, une forme d'exécution de ce siège :

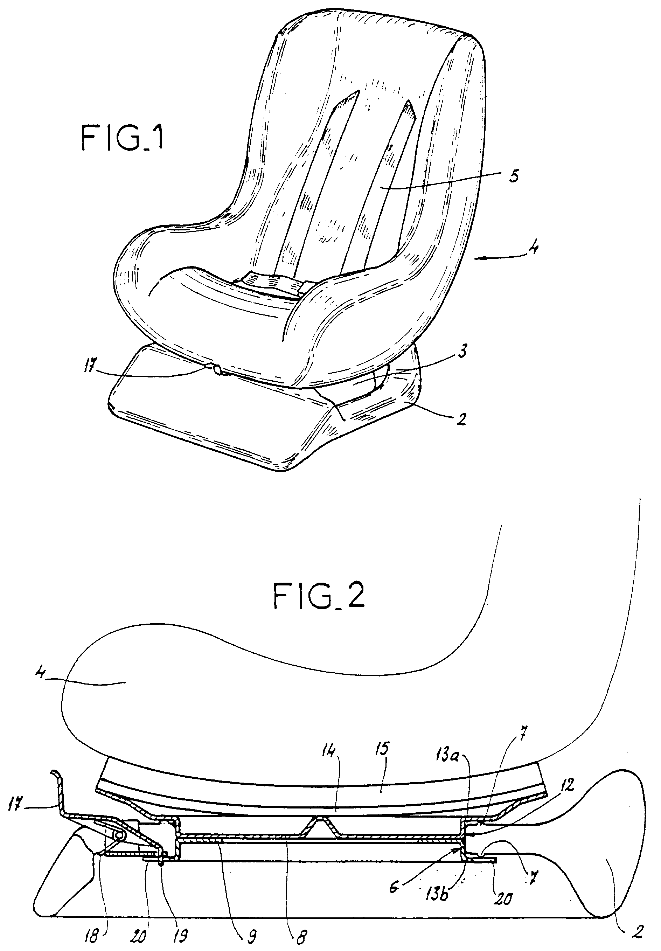

Figure 1 en est une vue en perspective ;
Figure 2 est une vue en coupe longitudinale du dispositif de pivotement, les autres éléments étant représentés en traits fins ;
Figure 3 est une vue en perspective éclatée du dispositif d'articulation du siège sur l'embase.

Le siège pour enfant représenté au dessin comprend une embase 2 destinée à être fixée sur un siège ou une banquette d'un véhicule automobile, par exemple à l'aide de sangles traversant des ouvertures 3. Sur cette embase, est fixé un siège 4 de structure connue, obtenu à partir d'une coque en matière synthétique, garnie d'un rembourrage, et munie d'un revêtement, ainsi que de sangles 5 destinées à assurer la tenue de l'enfant à l'intérieur du siège.

Conformément à une des caractéristiques essentielles de l'invention, l'embase comporte dans sa partie centrale une ouverture circulaire 6, de grand diamètre, délimitée sur ses faces supérieure et inférieure par des nervures 7 ménagées selon des arcs de cercle.

A l'intérieur de l'ouverture circulaire 6 sont montées deux coupelles métalliques, à savoir une coupelle supérieure 8 et une coupelle inférieure 9. Ces deux coupelles sont jointives dans la partie située au niveau de l'ouverture et assemblées l'une à l'autre par des boulons. Les deux coupelles 8 et 9 comportent chacune un rebord 12 prenant appui contre le bord de l'ouverture 6, ainsi qu'un retour 13a pour la coupelle 8 et 13b pour la coupelle 9, ces retours 13a et 13b prenant appui respectivement sur la face inférieure de l'embase et sur la face supérieure de celle-ci, plus précisément sur les nervures 7 que comportent ses deux faces.

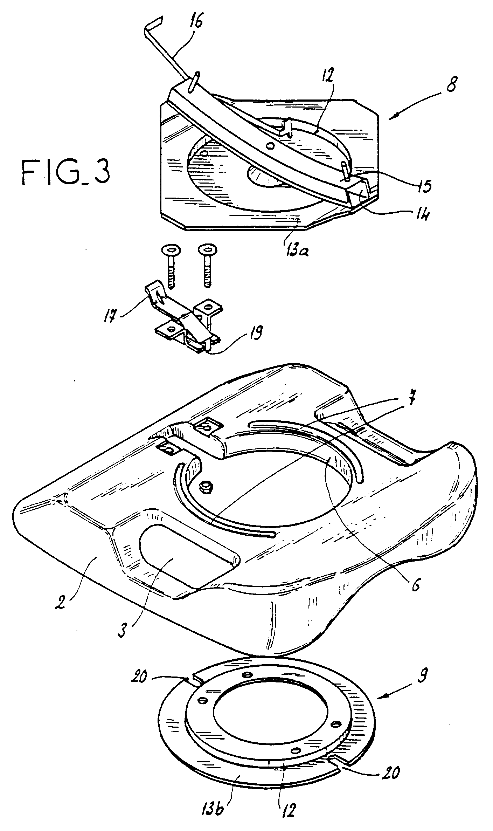

Comme montré notamment à la figure 3, la coupelle supérieure 8 possède dans sa partie située au-dessus de l'embase, une forme générale carrée, les deux diagonales du carré étant orientées longitudinalement et transversalement au siège.

Le montage du siège sur l'embase est réalisé, de façon connue en soi, par l'intermédiaire de deux rails courbes complémentaires 14, 15, susceptibles de coulisser l'un sur l'autre par actionnement d'un levier 16, le rail 14 étant solidaire de la coupelle 8, tandis que le rail 15 est solidaire du siège 4.

Il est ainsi possible de réaliser un basculement du siège 4 par rapport à la coupelle 8, afin de réaliser le réglage de l'inclinaison du siège.

Conformément à une autre caractéristique de l'invention, l'embase est équipée d'un levier 17 soumis à l'action d'un ressort 18, et dont l'extrémité 19 est destinée à pénétrer dans l'une de deux encoches 20, ménagées dans la coupelle inférieure 9. Ces deux encoches 20 occupent une position diamétralement opposée. L'engagement de l'extrémité 19 du levier dans l'une des deux encoches assure le blocage en rotation du siège par rapport à l'embase dans deux positions respectivement tournée vers l'avant et tournée vers l'arrière.

Il ressort de ce qui précède qu'il est très simple de procéder au déverrouillage des moyens de pivotement du siège par rapport à l'embase, par action sur le levier 17, et que ce pivotement s'effectue dans d'excellentes conditions compte tenu des surfaces de contact importantes entre les coupelles 8, 9 et l'embase du siège, évitant tout risque de coincement en cours de manoeuvre ou d'à-coups lors du pivotement.

En pratique il est possible pour mettre l'enfant dans son siège ou pour le retirer de celui-ci de placer le siège dans une position intermédiaire où il est tourné vers une portière du véhicule, ce qui facilite la manoeuvre pour la personne ayant en charge l'enfant. Il va de soi qu'en condition de circulation le siège est verrouillé dans une position tournée vers l'avant ou tournée vers l'arrière, par engagement de l'extrémité 19 du levier 17 dans l'une des deux encoches 20.

Comme il va de soi, l'invention ne se limite pas à la seule forme d'exécution de ce siège décrite ci-dessus à titre d'exemple ; elle en embrasse au contraire, toutes les variantes de réalisation, pourvu qu'elle rentrent dans l'étendue de la protection déterminée par la teneur des revendications qui suivent.

C'est ainsi, notamment que les coupelles 8, 9 pourraient être réalisées en un matériau autre que du métal, l'essentiel étant que le matériau soit suffisamment rigide, ou encore que la forme des coupelles pourrait être différente, l'essentiel étant qu'elles assurent un guidage contre le bord intérieur de l'ouverture circulaire, et qu'elles prennent appui sur et sous l'embase.

## Revendications

1. Siège automobile pour enfant, du type comportant un corps de siège constitué par une coque, et une embase (2) équipée de moyens de fixation au véhicule automobile, le support de la coque étant monté sur l'embase (2) avec possibilité de rotation par l'intermédiaire d'éléments (7, 8, 9) coopérant pour former un axe central, caractérisé en ce que l'embase (2) comporte une ouverture circulaire (6), à l'intérieur de laquelle sont solidarisées deux coupelles supérieure (8) et inférieure (9), comportant une partie prenant appui contre le bord délimitant l'ouverture, et deux ailes (13a, 13b) prenant appui respectivement au-dessus et au-dessous de la paroi de l'embase (2) dans laquelle est ménagée l'ouverture (6), des moyens (17-20) étant prévus pour assurer le blocage en rotation de l'ensemble constitué par les deux coupelles, vis-à-vis de l'embase (2), et en ce que l'embase (2) comporte des nervures (7) qui servent à l'appui des retours des coupelles supérieure (8) et inférieure (9).

2. Siège selon la revendication 1, caractérisé en ce que ces nervures (7) sont en forme d'arcs de cercle centrés sur l'axe de rotation du siège (4) par rapport à l'embase (2).

3. Siège selon l'une quelconque des revendications 1 à 2, caractérisé en ce que la coupelle inférieure (9) possède une forme circulaire, tandis que la coupelle supérieure (8) sur laquelle est fixée le siège possède une forme sensiblement carrée dont les diagonales sont situées sur les lignes longitudinale et transversale du siège.

4. Siège selon la revendication 1, caractérisé en ce que les moyens (17-20) de blocage en rotation de l'ensemble constitué par les deux coupelles (8, 9) vis-à-vis de l'embase (2), sont constituées par un levier (17) articulé sur l'embase, dont une extrémité (19) pénètre sous l'action de moyens élastiques (18) dans une encoche (20) ménagée dans l'une des deux coupelles.

5. Siège selon la revendication 4, caractérisé en ce que l'une des deux coupelles (8, 9) comporte deux encoches (20) diamétralement opposées.

## Claims

1. Car seat for a child, of the type having a seat body formed by a shell, and a base (2) equipped with means of fixing to the car, the shell support being mounted on the base (2) with a facility for rotation by means of members (7, 8, 9) cooperating to form a central axis, characterised in that the base (2) has a circular opening (6), inside which are fixed two dishes, top (8) and bottom (9), having a part bearing against the edge delimiting the opening, and two flanges (13a, 13b) bearing respectively above and below the wall of the base (2) in which the opening (6) is formed, means (17-20) being provided to ensure the locking, with respect to rotation, of the assembly consisting of the two dishes, vis-a-vis the base (2), and in that the base (2) has ribs (7) which serve to support the returns on the top (8) and bottom (9) dishes.

2. Seat according to Claim 1, characterised in that the ribs (7) are in the shape of arcs of a circle centred on the axis of rotation of the seat (4) with respect to the base (2).

3. Seat according to either one of Claims 1 to 2, characterised in that the bottom dish (9) has a circular shape, whilst the top dish (8) on which the seat is fixed has a substantially square shape, the diagonals of which are situated on the longitudinal and transverse lines of the seat.

4. Seat according to Claim 1, characterised in that the means (17-20) of locking, with respect to rotation, the assembly consisting of the two dishes (8, 9), vis-a-vis the base (2), consist of a lever (17) pivoted on the base, one end (19) of which enters, under the action of elastic means (18), a recess (20) formed in one of the two dishes.

5. Seat according to Claim 4, characterised in that one of the two dishes (8, 9) has two diametrically opposed recesses (20).

## Patentansprüche

1. Fahrzeugsitz für Kinder eines Typs, der einen von einer Schale gebildeten Sitzkörper und einen Fuß (2) enthält, der mit Mitteln zur Anbringung am Fahrzeug versehen ist, wobei die Halterung der Schale auf dem Fuß (2) angebracht ist, mit der Möglichkeit zum Drehen mittels Elementen (7, 8, 9), die zur Bildung einer zentralen Achse zusammenwirken, dadurch gekennzeichnet, daß der Fuß (2) eine runde Öffnung (6) enthält, in deren Innerem eine obere (8) und eine untere (9) Schale festgelegt sind, die eine gegen den die Öffnung begrenzenden Rand drückende Partie und zwei Flügel (13a, 13b) enthalten, die jeweils oben und unten auf die Wand des Fußes (2) drücken, in den die Öffnung (6) eingebracht ist, wobei Mittel (17 bis 20) vorgesehen sind, um das Blockieren der Drehung der von den beiden Schalen gebildeten Anordnung gegenüber dem Fuß (2) zu gewährleisten, und daß der Fuß (2) Rippen (7) enthält, die der oberen (8) und der unteren (9) Schale als Druck-Gegenstücke dienen.

2. Sitz nach Anspruch 1, dadurch gekennzeichnet, daß diese Rippen (7) die Form von Kreisbögen haben, die um die Rotationsachse des Sitzes (4) bezüglich des Fußes (2) zentriert sind.

3. Sitz nach einem der Ansprüche 1 bis 2, dadurch gekennzeichnet, daß die untere Schale (9) eine runde Form aufweist, während die obere Schale (8), auf der der Sitz angebracht ist, im wesentlichen quadratisch ist, wobei deren Diagonalen auf der sich längserstreckenden und quererstreckenden Linie des Sitzes liegen.

4. Sitz nach Anspruch 1, dadurch gekennzeichnet, daß die Mittel (17 bis 20) zum Blockieren der Drehung der von den beiden Schalen (8, 9) gebildeten Anordnung gegenüber dem Fuß (2) von einem gelenkig am Fuß gelagerten Hebel (17) gebildet sind, dessen eines Ende (19) unter der Einwirkung von elastischen Mitteln (18) in eine in eine der beiden Schalen eingebrachte Kerbe (20) eingreift.

5. Sitz nach Anspruch 4, dadurch gekennzeichnet, daß eine der beiden Schalen (8, 9) zwei diametral gegenüberliegende Kerben (20) enthält.
